# FASCICULE DE BREVET EUROPEEN

(11) **EP 1 700 454 B1**
(45) Date de publication et mention de la délivrance du brevet: **07.07.2010**
(21) Numéro de dépôt: 04816419.8
(22) Date de dépôt: 17.12.2004
(51) Int. Cl.: H04L 29/06

(54) **TERMINAL DE TELECOMMUNICATION A DEUX ESPACES D EXECUTION**
TELEKOMMUNIKATIONSENDGERÄT MIT ZWEI AUSFÜHRUNGSUMGEBUNGEN
TELECOMMUNICATION TERMINAL COMPRISING TWO EXECUTION SPACES

(30) Priorité: 23.12.2003 FR 0315253
(43) Date de publication de la demande: 13.09.2006
(73) Titulaire: FRANCE TELECOM, 75015 Paris (FR); TRUSTED LOGIC, 78000 Versailles (FR)
(72) Inventeur: ALVARADO, Cuihtlauac, F-22300 Lannion (FR); BLANCHET, Jean-Bernard, F-75015 Paris (FR); FREREBEAU, Laurent, F-78000 Versailles (FR); FREY, Alexandre, F-75018 Paris (FR); VETILLARD, Eric, F-06560 Valbonne (FR); MONTEL, Geoffroy, F-75011 Paris (FR); MAUPETIT, Matthieu, F-75015 Paris (FR)
(74) Mandataire: Callon de Lamarck, Jean-Robert
(86) Numéro de dépôt international: PCT/FR2004/003284
(87) Numéro de publication internationale: WO 2005/071925

(56) Documents cités:
- WO-A-00/43878
- GONG L ET AL: "Going beyond the sandbox: an overview of the new security architecture in the Java<TM> Development Kit 1.2" PROCEEDINGS OF THE USENIX SYMPOSIUM ON INTERNET TECHNOLOGIES AND SYSTEMS, 8 décembre 1997 (1997-12-08), pages 103-112, XP002100907

## Description

L'invention concerne l'exécution de programmes et applications, sur un dispositif informatique à interface utilisateur (clavier, écran, carte son, zone tactile, souris, etc...), par exemple sur une passerelle domestique, une machine de vente (machine publique par exemple) ou encore sur un terminal de télécommunications (du PC - ordinateur personnel - au téléphone mobile).

On connaît différentes approches pour l'implémentation d'applications dans les terminaux de télécommunications.

Ainsi, le profil MIDP 2.0., sur machine virtuelle, met en oeuvre une police de sécurité basée sur des standards ouverts, simple à utiliser, qui ne demande rien à l'utilisateur, qui prend en compte les besoins de chaque intervenant, du développement à l'exécution (on sépare les concepts d'utilisateur, d'opérateur, d'OEM, de tierce partie de confiance).

Il permet de protéger l'intégrité et vérifier l'origine des applications pendant le téléchargement et l'exécution de celles-ci, de contrôler l'accès aux ressources critiques suivant une politique de sécurité, d'avertir l'utilisateur de ce qui se passe, et peut même lui demander son avis.

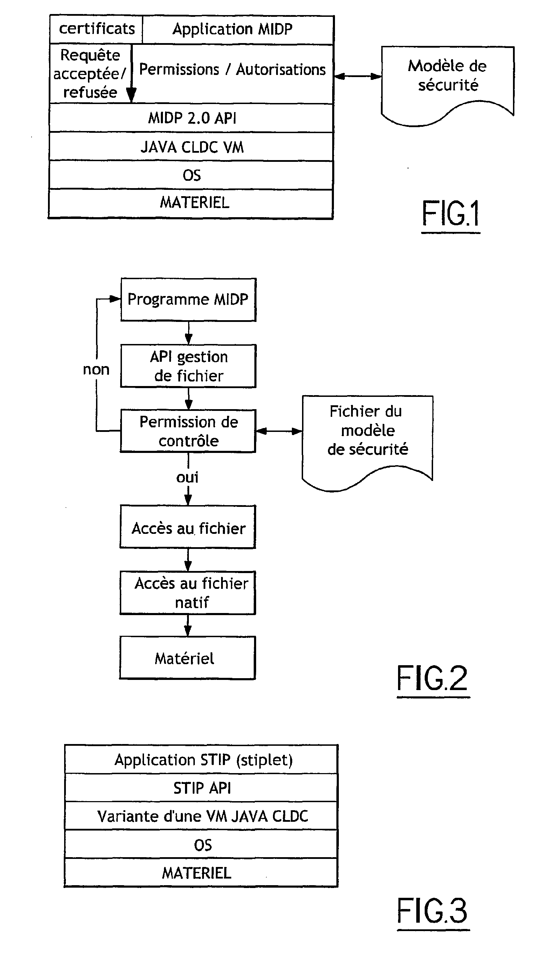

La prise en compte de la politique de sécurité se fait assez simplement, au niveau d'une API à protéger, par un appel à la méthode « check permission » de la classe « Midlet » (figure 2).

Ceci demande que la fonction d'appel de fichier MIDP ne soit pas accessible directement depuis les programmes MIDP (fonction protected).

La politique de sécurité de MIDP 2.0 est très adaptée aux besoins des divers intervenants. La possibilité de demander l'avis de l'utilisateur suivant un certain nombre de critères (toujours, une fois, pour une session, jamais) est très avantageuse.

Il n'en reste pas moins que son implémentation pose deux types de problèmes.

Tout d'abord, l'exécution de la procédure protégée se fait dans le même espace d'exécution que le programme appelant, ce qui facilite le risque de « fuites ». Imaginons ainsi un service de chiffrement appelé par deux midlets simultanément, rien ne garantit si on n'y fait guère attention qu'une midlet ne pourra récupérer le contenu de la clé privée utilisée par l'autre midlet.

Le premier problème est donc un manque de sécurité, notamment pour les applications à risque telles que le paiement, la signature ou encore par exemple les applications DRM.

Des exploits ont d'ailleurs montré qu'avec une erreur d'implémentation, on pouvait passer outre ce système de permissions.

Le deuxième problème du profil MIDP est posé par les spécifications du profil MIDP lui-même. Il n'est pas adapté à la preuve formelle de programmes. Cela pose un problème dans certains secteurs (notamment banquiers) où une midlet ne peut être modélisée par des méthodes formelles, et donc ne peut pas être certifiée par ces méthodes.

En d'autres termes, il n'existe pas de technique permettant de prouver, par des méthodes formelles, la validité par rapport à des spécifications d'un programme programmé dans ce profil.

Un autre profil, le profil STIP, est lui plus spécialement adapté pour donner accès à des APIs orientés quant à la sécurité, telles que l'accès à la SIM.

Les machines virtuelles STIP (figure 3) permettent de faire fonctionner les programmes spécialement écrits pour le profil STIP.

L'autre force de STIP est que son modèle de programmation et ses APIs se prêtent bien à l'analyse suivant les méthodes formelles. Cela a permis d'ailleurs de rallier le milieu bancaire à son design, car la conformité du code aux spécifications peut être prouvée de manière formelle.

Aussi le profil STIP, utilisé dans le milieu bancaire, est, par ses limitations, adapté à la preuve de programmes.

Toutefois, le profil STIP a été conçu pour des systèmes fermés (on n'y télécharge pas impunément des applications dont on n'a pas confiance).

Ainsi aucun modèle de sécurité n'est mis en place (dans la version 2.1.1. de la spécification), et donc toute application STIP (stiplet) peut accéder à n'importe quelle API de type STIP déjà implémentée.

Le profil STIP n'est donc pas adapté pour la réalisation de terminaux où un utilisateur est susceptible de télécharger et mettre en oeuvre des applications courantes telles que jeux ou applications utilitaires divers.

L'invention se donne ici pour but de proposer une configuration permettant, dans un terminal de télécommunications, de mettre en oeuvre à la fois des applications d'utilisateur diverses, et à la fois des applications requerrant un haut niveau de sécurité.

L'invention vise en outre à faciliter la programmation et la mise en oeuvre d'applications, notamment en facilitant la certification du bon fonctionnement des applications nouvellement programmées.

On connaît certes le principe des téléphones mobiles hébergeant deux machines virtuelles sous la forme physique de deux processeurs, l'un constitués par le terminal lui-même et l'autre constitué par la carte SIM.

La carte SIM vérifie des exigences de sécurité élevées, tandis que le processeur du terminal lui-même et son contenu sont, eux, accessibles par l'utilisateur.

Toutefois une telle implémentation présente encore certains inconvénient majeurs.

On connaît également, par le document WO 00/43878 un dispositif conforme au préambule de la revendication 1.

Ainsi un autre but de l'invention est de proposer un dispositif, associé en réseau ou pas, dans lequel un espace sécurisé et un espace non sécurisé sont tous deux mis à profit, par exemple en permettant à l'espace sécurisé d'accéder aux interfaces utilisateurs telles que clavier ou écran à la place de l'espace non sécurisé, et a contrario permettre par exemple à l'espace non sécurisé d'accéder à une communication sécurisée avec un opérateur connu pour garantir une telle sécurité. On citera notamment, en tant que tel opérateur de sécurité, les opérateurs de téléphonie, notamment mobile, les banques, les fournisseurs d'objets multimédia à diffusion sélective ou payante, les opérateurs de fourniture de service contre signature électronique via ledit dispositif.

Des fournisseurs d'objets multimédia à diffusion sélective sont notamment les « DRM » ( Digital Rights Management, gestion des droits sous licence), serveurs qui délivrent un contenu typiquement musical,vidéo ou de jeu, sous licence, et sous la forme d'un fichier prévu pour être lu sous diverses contraintes, par exemple un certain nombre de fois.

Un but de l'invention est de proposer de tels moyens dans lesquels, en outre, on puisse être certain que les deux espaces d'exécution associés (l'un à sécurité plus élevée que l'autre) soient effectivement ceux qui étaient destinés ou autorisé à être associés l'un à l'autre ab initio.

Ces buts sont atteints selon l'invention grâce à un dispositif informatique à interface utilisateur selon la revendication 1.

D'autres caractéristiques, buts et avantages de l'invention apparaîtront à la lecture de la description détaillée qui va suivre, faite en référence aux figures annexées sur lesquelles:
- la figure 1 est un schéma illustrant une implémentation MIDP selon l'art antérieur;
- la figure 2 est un schéma illustrant la mise en oeuvre de moyens de protection dans une telle implémentation MIDP ;
- la figure 3 est un schéma illustrant une implémentation STIP, conforme à l'art antérieur ;
- la figure 4 illustre une configuration fonctionnelle d'un terminal conforme à l'invention, selon une variante préférentielle.

Le mode particulier de réalisation que l'on décrira maintenant permet de bénéficier du meilleur des deux techniques MIDP et STIP, données à titre d'exemple, au sein d'un environnement d'exécution cohérent.

On y constitue le profil « utilisateur », le profil MIDP. Ce profil est très populaire dans le monde mobile pour la création de jeux et d'applications utilitaires diverses. L'utilisateur peut ainsi télécharger et exécuter des applications qu'il trouve sur le réseau, comme il le ferait avec un téléphone MIDP courant. Le profil MIDP inclut donc ici des applications mises en place et activées par l'utilisateur lui-même.

Le profil STIP constitue ici un profil additionnel, et plus spécifiquement un profil « opérateur ». Le profil STIP est très adapté aux applications qui demandent un haut niveau de sécurité, telles que les applications bancaires. Ainsi, les consortiums bancaires ont déjà fait confiance en la possibilité de certifier des applications STIP par des méthodes formelles pour les implémenter dans des terminaux de paiement électronique (TPE).

La présente invention permet donc de fournir aux développeurs un ensemble d'API opérateur dont l'exécution est assurée dans un espace d'exécution approprié à la programmation aisée par ces développeurs, espace de même profil ou non, totalement distinct.

Ce mode de réalisation permet donc à l'opérateur de fournir un lot d'applications sécurisées, telles que paiement, de signature ou encore de DRM, totalement indépendant du profil d'exécution des applications « courantes ».

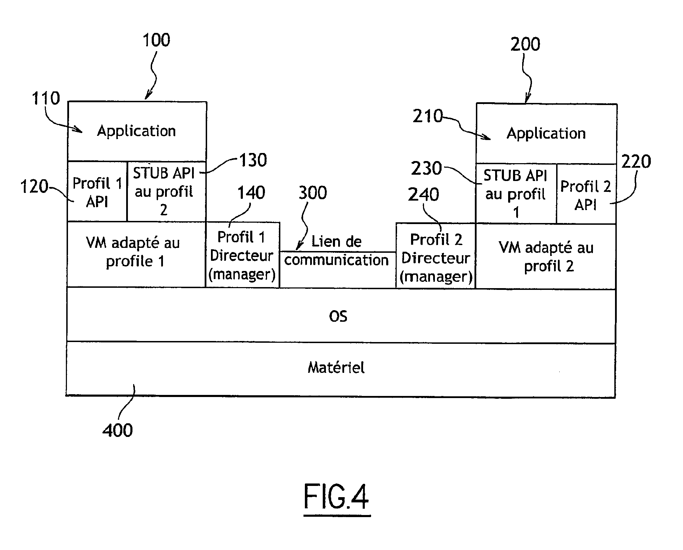

Le terminal représenté en figure 4 inclut et fait fonctionner en harmonie deux machines virtuelles 100 et 200 de profil distincts P1 et P2 (ou non). L'une 100 des deux machines est dédiée aux applications utilisateurs, l'autre 200 aux applications de l'opérateur.

Les profils correspondants P1 et P2, ici respectivement le profil MIDP et le profil STIP, sont ici eux-mêmes dédiés respectivement aux applications utilisateur et aux applications opérateur.

A la figure 4, on a représenté ainsi deux machines virtuelles 100 et 200.

La machine virtuelle « utilisateur » 100 est mise à disposition de l'utilisateur pour télécharger, installer, désinstaller, exécuter, stopper, comme bon lui semble des applications dans le profil MIDP. Les applications 110 qui y tournent utilisent l'API 120 de ce profil, ainsi qu'une API « stub » au même profil que celui de la machine 100, cette API stub étant référencée 130 sur la figure 4.

La deuxième machine, référencée 200, est la machine virtuelle « opérateur » : seul l'opérateur, par exemple l'opérateur de téléphonie mobile ou encore l'opérateur internet (fournisseur d'accès), par un mécanisme OTA (Over The Air), peut administrer cet espace d'exécution.

Il peut y installer, désinstaller, activer, désactiver comme bon lui semble des applications 210 écrites suivant le formalisme du profil 100. Ces applications 210 ont accès aux APIs 220 du profil P2 et à une ou plusieurs API de haut niveau illustrées sous la référence 230 sur la figure 4.

Ces API de haut niveau 230 permettent d'accéder à des services offerts par le profil de la machine 100. L'accès aux APIs, que ce soit du profil de la machine 200 ou du stub 230 au profil de la machine 100, se fait suivant le modèle de sécurité inhérent au profil de la machine 200.

L'API « stub » 130 est une API de haut niveau, exprimée suivant le modèle de programmation du profil 100, permettant d'accéder à des services offerts par le profil P2. L'accès aux APIs, que ce soit au profil de la machine 100 ou d'un stub 130 se fait suivant le modèle de sécurité inhérent au profil P1 de la machine 100.

Le fonctionnement des stubs 130 et 230 est le suivant :
L'appel à une API du stub 130, 230 est transformé en flux d'octets (processus de sérialisation, ou marshalling/unmarshalling suivant les appellations).

Ce flux est reçu par un manager 140, 240 du profil opposé via un canal de communication 300, déserialisé et converti en l'exécution d'une procédure dans le profil distant. Le retour d'exécution de cette procédure est de nouveau sérialisé dans le profil distant, et repasse dans le canal de communication 300 entre les deux profils P1 et P2 des machines 100 et 200, la réponse est désérialisée dans le profil originel et transformée en retour d'appel de l'API « stub ».

Ainsi, on dispose de deux espaces d'exécution indépendants consistant ici chacun en une machine différente et un profil différent, et en relation très étroite par l'intermédiaire d'API stub 130 et 230.

En variante, les deux profils P1 et P2 peuvent être du même type, par exemple deux profils MIDP ou deux profils STIP pour deux machines différentes.

On notera également que l'on peut adopter deux profils P1 et p2 différents au sein d'une même machine virtuelle.

Ce mode de réalisation permet donc d'offrir une API de paiement aux développeurs d'applications MIDP, où le paiement lui-même s'effectuera dans le cadre de l'exécution d'une machine virtuelle STIP contrôlée par l'opérateur.

En d'autres termes, une application MIDP, développé aisément, pourra offrir un moyen de paiement à l'utilisateur en faisant fonctionner une application de paiement de la machine 200 via le lien de communication 300. Une application MIDP est donc, grâce à l'invention, capable d'offrir une fonctionnalité de paiement de grande fiabilité.

Les deux espaces d'exécution, 100 et 200, chacun constitué par un couple machine virtuelle/profil d'exécution, différents l'un de l'autre par le profil ou par la machine virtuelle, sont toutefois tous deux implémentés par une même dispositif physique de traitement 400 (même entité hardware 400).

Ce dispositif de traitement hébergeant les deux espaces d'exécution est unique en ce sens qu'il ne peut être scindé sans destruction de son fonctionnement.

Ainsi il est impossible de séparer physiquement les deux espaces d'exécution, et donc également impossible d'associer un espace ainsi séparé avec un autre espace, lui non autorisé.

Un telle réalisation sur moyen unique est obtenue par exemple en implémentant les deux espaces d'exécution sur un même circuit intégré formant un unique processeur.

On assure ainsi que deux environnements, l'un sécurisé et l'autre non sécurisé, sont indissociables.

La sécurité proposée par un opérateur (téléphonie, banque, administration à signature, diffuseur multimedia) s'en trouve améliorée, qu'il s'agisse d'empêcher des détournements de fonctions de paiement, d'assurer la confidentialité ou la non falsification de codes secrets, de fiabiliser l'usage d'une signature électronique, ou encore de veiller à empêcher de dépasser des droits d'utilisation limités d'oeuvres payantes.

Avantageusement, les profils P1, P2 de chacun des deux espaces d'exécution 100, P1, 200, P2 sont respectivement un profil STIP et un profil faisant partie du groupe constitué des profils STIP, MIDP, OSGI, et « .net ».

## Revendications

1. Dispositif informatique à interface utilisateur, comprenant des moyens de mise en oeuvre d'une série d'applications, ces moyens incluant notamment un premier espace d'exécution machine virtuelle/profil de fonctionnement (100, P1, 200, P2) et un second espace d'exécution machine virtuelle/profil de fonctionnement (100, P1, 200, P2), les deux espaces d'exécution sont hébergés par un même moyen physique de traitement (400) qui est agencé pour être non scindable en deux parties sans destruction de ce moyen physique de traitement (400), chaque espace d'exécution hébergeant des applications (110, 120, 130, 140, 220, 230), **caractérisé en ce que** les applications (110, 120, 130, 210, 220, 230) du second espace d'exécution (100, P1, 200, P2) sont des applications non modifiables par l'utilisateur, tandis que les applications (110, 120, 130, 210, 220, 230) du premier espace d'exécution (100, P1, 200, P2) sont des applications modifiables par l'utilisateur, de sorte que les applications du second espace d'exécution (100, P1, 200, P2) sont des applications à degré de sécurité spécifiquement plus élevé que celui des applications du premier espace d'exécution (100, P1, 200, P2) ; et **en ce que** la machine virtuelle du second espace d'exécution (100, P1, 200, P2) est distincte de celle du premier espace d'exécution (100, P1, 200, P2), chacune de ces deux machines virtuelles n'étant associée qu'à un profil de fonctionnement.

2. Dispositif selon la revendication 1, **caractérisé en ce que** les applications (110, 120, 130, 210, 220, 230) du second espace d'exécution (100, P1, 200, P2) sont des applications modifiables par un opérateur de sécurité appartenant au groupe constitué des opérateurs de téléphonie, banques, fournisseurs d'objets multimédia à diffusion sélective ou payante, opérateurs de fourniture de services contre signature électronique via ledit dispositif.

3. Dispositif selon la revendication 1 ou la revendication 2, **caractérisé en ce qu'**il constitue un terminal téléphonique.

4. Dispositif selon la revendication 3, **caractérisé en ce qu'**il constitue un terminal de téléphonie mobile.

5. Dispositif selon l'une quelconque des revendications précédentes, **caractérisé en ce qu'**il comporte des moyens de communication (130, 230, 300) entre les deux espaces d'exécution (100, P1, 200, P2),

6. Dispositif selon la revendication 5, **caractérisé en ce que** les moyens de communication (130, 230, 300) entre les deux espaces d'exécution sont prévus pour autoriser une application (130, 230) d'un des deux espaces d'exécution à faire appel à des moyens de traitement du second espace d'exécution (100, P1, 200, P2).

7. Dispositif selon l'une quelconque des revendications précédentes, **caractérisé en ce que** chacun des deux espaces d'exécution inclut au moins une API distincte (120, 130, 220, 230).

8. Dispositif selon la revendication 5, **caractérisé en ce que** les moyens de communication incluent une API « stub » (130, 230) ayant pour rôle de faire appel à des ressources de l'espace d'exécution opposé (100, P1, 200, P2), ces ressources mettant en oeuvre une sélection quant à l'accès à elles-mêmes en fonction de l'application (110, 210) les appelant.

9. Dispositif selon, **caractérisé en ce que** les moyens de communication entre les deux espaces d'exécution (100, P1, 200, P2) incluent des moyens mettant en oeuvre une sérialisation/désérialisation ou un marshalling/unmarshalling.

10. Dispositif selon l'une quelconque des revendications précédentes, **caractérisé en ce que** l'un des deux espaces d'exécution (100, P1, 200, P2) inclut un profil de type STIP.

11. Dispositif selon l'une quelconque des revendications précédentes, **caractérisé en ce que** l'un des deux espaces d'exécution (100, P1, 200, P2) inclut un profil MIDP.

12. Dispositif selon l'une quelconque des revendications précédentes, **caractérisé en ce que** les profils (P1, P2) de chacun des deux espaces d'exécution (100, P1, 200, P2) sont respectivement un profil STIP et un profil faisant partie du groupe constitué des profils STIP, MIDP, OSGI, et « .net ».

## Claims

1. A user interface-equipped computing device, comprising means for executing a series of applications, said means including especially a first execution space virtual machine / operating profile (100, P1, 200, P2), and a second execution space virtual machine / operating profile (100, P1, 200, P2), the two execution spaces being hosted by the same physical processing means (400) designed such that it cannot be separated into two parts without destroying said physical processing means (400), each execution space hosting applications (110,120, 130,140, 220,230), **characterised in that** the applications (110,120, 130,210, 220,230) of the second execution space (100, P1, 200, P2) are applications not modifiable by the user, whereas the applications (110,120, 130,210, 220,230) of the first execution space (100, P1, 200, P2) are applications modifiable by the user, such that the applications of the second execution space (100, P1, 200, P2) are applications having a level of security specifically higher than that of the applications of the first execution space (100, P1, 200, P2), and **in that** the virtual machine of the second space (100, P1, 200, P2) is distinct from that of the first execution space (100, P1, 200, P2), each of said two virtual machines being associated only with one functional profile.

2. The device as claimed in Claim 1, **characterised in that** the applications (110,120, 130,210, 220,230) of the second execution space (100, P1, 200, P2) are applications modifiable by a security operator belonging to the group constituted by operators of telephones, banks, selective or pay multimedia broadcast item suppliers, service provider operators against electronic signature via said device.

3. The device as claimed in Claim 1 or Claim 2, **characterised in that** it constitutes a telephone terminal.

4. The device as claimed in Claim 3, **characterised in that** it constitutes a mobile telephony terminal.

5. The device as claimed in any one of the preceding claims, **characterised in that** it comprises communications means (130,230, 300) between the two execution spaces (100, P1, 200, P2).

6. The device as claimed in Claim 5, **characterised in that** the communications means (130,230, 300) between the two execution spaces are provided to enable application (130,230) of one of the two execution spaces to employ processing means of the second execution space (100, P1, 200, P2).

7. The device as claimed in any one of the preceding claims, **characterised in that** each of the two execution spaces includes at least one distinct API (120,130, 220,230).

8. The device as claimed in Claim 5, **characterised in that** the communications means include an API stub (130,230), the role of which is to employ resources of the opposite execution space (100, P1, 200, P2), said resources utilising a selection as to access to same as a function of the application (110, 210) calling it.

9. The device as claimed in Claim 5, **characterised in that** the communications means between the two execution spaces (100, P1, 200, P2) include means utilising serialisation / deserialisation or marshalling /unmarshalling.

10. The device as claimed in any one of the preceding claims, **characterised in that** one of the two execution spaces (100, P1, 200, P2) includes a profile of type STIP.

11. The device as claimed in any one of the preceding claims, **characterised in that** one of the two execution spaces (100, P1, 200, P2) includes a MIDP profile.

12. The device as claimed in any one of the preceding claims, **characterised in that** the profiles (P1, P2) of each of the two execution spaces (100, P1, 200, P2) are respectively a STIP profile and a profile forming part of the group constituted by STIP, MIDP, OSGI profiles, and ".net".

## Patentansprüche

1. Datenverarbeitungsvorrichtung mit einer Benutzeroberfläche, umfassend Mittel zur Durchführung eine Reihe von Anwendungen, wobei diese Mittel insbesondere einen ersten Ausführungsraum virtuelle Maschine/Betriebsprofil (100, P1, 200, P2) einschließen und einen zweiten Ausführungsraum virtuelle Maschine/Betriebsprofil (100, P1, 200, P2), die zwei Ausführungsräume von einem gleichen physischen Bearbeitungsmittel (400) untergebracht sind, das so angeordnet ist, dass es nicht in zwei Teile aufgespaltet werden kann, ohne dass dieses physische Bearbeitungsmittel (400) zerstört wird, wobei jeder Ausführungsraum Anwendungen (110, 120, 130, 140, 220, 230) aufnimmt, **dadurch gekennzeichnet, dass** die Anwendungen (110, 120, 130, 210, 220, 230) des zweiten Ausführungsraums Anwendungen sind, die vom Benutzer nicht geändert werden können, während die Anwendungen (110, 120, 130, 210, 220, 230) des ersten Ausführungsraums (100, P1, 200, P2) Anwendungen sind, die vom Benutzer geändert werden können, so dass die Anwendungen des zweiten Ausführungsraums (100, P1, 200, P2) Anwendungen mit einem Sicherheitsgrad sind, der spezifisch höher als derjenige der Anwendungen des ersten Ausführungsraums (100, P1, 200, P2) ist; und **dadurch**, dass die virtuelle Maschine des zweiten Ausführungsraums (100, P1, 200, P2) verschieden von derjenigen des ersten Ausführungsraums (100, P1, 200, P2) ist, wobei jede dieser zwei virtuellen Maschinen nur mit einem Betriebsprofil verbunden ist.

2. Vorrichtung nach Anspruch 1, **dadurch gekennzeichnet, dass** die Anwendungen (110, 120, 130, 210, 220, 230) des zweiten Ausführungsraums (100, P1, 200, P2) Anwendungen sind, die von einer Sicherheitsbedienungsperson geändert werden können, die der Gruppe angehört, die sich aus Telefoniebedinungspersonal, Banken, Lieferanten von Multimediagegenständen zur selektiven oder zu zahlenden Verbreitung, Bedienungspersonal zur Bereitstellung von Dienstleistungen bei elektronischer Unterschrift über die Vorrichtung zusammensetzt.

3. Vorrichtung nach Anspruch 1 oder Anspruch 2, **dadurch gekennzeichnet, dass** sie aus einem Telefonendgerät besteht.

4. Vorrichtung nach Anspruch 3, **dadurch gekennzeichnet, dass** sie aus einem Mobiltelefon-Endgerät besteht.

5. Vorrichtung nach einem der vorhergehenden Ansprüche, **dadurch gekennzeichnet, dass** sie Mittel zur Kommunikation (130, 230, 300) zwischen den zwei Ausführungsräumen (100, P1, 200, P2) umfasst.

6. Vorrichtung nach Anspruch 5, **dadurch gekennzeichnet, dass** die Kommunikationsmittel (130, 230, 300) zwischen den zwei Ausführungsräumen dazu vorgesehen sind, es einer Anwendung (130, 230) eines der zwei Ausführungsräume zu erlauben, Bearbeitungsmittel des zweiten Ausführungsraums (100, P1, 200, P2) anzurufen.

7. Vorrichtung nach einem der vorhergehenden Ansprüche, **dadurch gekennzeichnet, dass** jeder der zwei Ausführungsräume mindestens eine verschiedene API (120, 130, 220, 230) einschließen.

8. Vorrichtung nach Anspruch 5, **dadurch gekennzeichnet, dass** die Kommunikationsmittel eine "Stub"-API (130, 230) einschließen, die zur Aufgabe hat, Ressourcen des gegenüberliegenden Ausführungsraums (100, P1, 200, P2) anzurufen, wobei diese Ressourcen eine Auswahl hinsichtlich des Zugangs zu ihnen selbst je nach der Anwendung (110, 210), die sie anruft, treffen.

9. Vorrichtung nach Anspruch 5, **dadurch gekennzeichnet, dass** die Kommunikationsmittel zwischen den zwei Ausführungsräumen (100, P1, 200, P2) Mittel einschließen, die eine Serialisierung/Entserialisierung oder ein Marshalling/Unmarshalling durchführen.

10. Vorrichtung nach einem der vorhergehenden Ansprüche, **dadurch gekennzeichnet, dass** einer der zwei Ausführungsräume (100, P1, 200, P2) ein Profil des Typs STIP einschließt.

11. Vorrichtung nach einem der vorhergehenden Ansprüche, **dadurch gekennzeichnet, dass** einer der zwei Ausführungsräume (100, P1, 200, P2) ein Profil des Typs MIDP einschließt.

12. Vorrichtung nach einem der vorhergehenden Ansprüche, **dadurch gekennzeichnet, dass** die Profile (P1, P2) jedes der zwei Ausführungsräume (100, P1, 200, P2) jeweils ein STIP-Profil und ein Profil sind, dass Teil der Gruppe ist, die die Profile STIP, MOP, OSGI und ".net" umfasst.
